# FASCICULE DE BREVET EUROPEEN

(11) **EP 3 507 911 B1**
(45) Date de publication et mention de la délivrance du brevet: **20.05.2020**
(21) Numéro de dépôt: 17768996.5
(22) Date de dépôt: 01.09.2017
(51) Int. Cl.: H04B 1/3827, H01Q 1/27

(54) **APPAREIL ÉLECTRONIQUE COMPORTANT UNE STRUCTURE D'ANTENNE POUR L'ÉMISSION ET/OU LA RÉCEPTION DE SIGNAUX RADIOÉLECTRIQUES ET UNE SANGLE SERVANT D'ATTACHE DE L'APPAREIL**
ELEKTRONISCHE VORRICHTUNG MIT EINER ANTENNENSTRUKTUR ZUM SENDEN UND/ODER EMPFANGEN VON RADIOELEKTRISCHEN SIGNALEN UND BAND ZUR BEFESTIGUNG DER VORRICHTUNG
ELECTRONIC APPARATUS COMPRISING AN ANTENNA STRUCTURE FOR SENDING AND/OR RECEIVING RADIOELECTRIC SIGNALS AND A STRAP SERVING TO FASTEN THE APPARATUS

(30) Priorité: 02.09.2016 FR 1658194
(43) Date de publication de la demande: 10.07.2019
(73) Titulaire: Sigfox, 31670 Labege (FR)
(72) Inventeur: JOUANLANNE, Cyril, 31300 Toulouse (FR); FOURTET, Christophe, 82170 Pompignan (FR)
(74) Mandataire: Ipside
(86) Numéro de dépôt international: PCT/EP2017/071960
(87) Numéro de publication internationale: WO 2018/041996

(56) Documents cités:
- EP-A1- 1 489 471
- EP-A1- 1 513 220
- US-B1- 6 350 055

## Description

### DOMAINE TECHNIQUE

La présente invention appartient au domaine des télécommunications radioélectriques, et concerne plus particulièrement un appareil comportant un circuit électronique, une antenne pour l'émission et/ou la réception de signaux radioélectriques pour une communication sans fil avec un réseau d'accès, et une sangle servant d'attache de l'appareil.

### ÉTAT DE LA TECHNIQUE

La présente invention trouve une application particulièrement avantageuse, bien que nullement limitative, dans le cas d'appareils du type montres connectées (connues dans la littérature anglo-saxonne comme « smart watch »), dans lesquelles la sangle est un bracelet leur servant d'attache au poignet. De telles montres connectées peuvent communiquer par liens radioélectriques dans des bandes de fréquences inférieures à 3GHz, voire davantage, soit pour des fonctions de télécommunications (2G, 3G, 4G et autres), pour des échanges de données par Bluetooth, pour des communications entre machines (Internet des objets) telles que les réseaux Sigfox ou « WiFi », soit pour des fonctions de positionnement par satellites tels les systèmes « GPS » ou « GALILEO », par exemple.

Un autre exemple d'application de l'invention est celui d'appareils de type colliers d'animaux, permettant de les localiser par positionnement par satellites, ou par triangulation par rapport à des stations de base d'un réseau d'accès terrestre. L'appareil communique leur position grâce à un système de communication sans fil à bande ultra étroite (« Ultra Narrow Band » ou UNB dans la littérature anglo-saxonne), dont le spectre fréquentiel instantané des signaux radioélectriques transmis entre les terminaux et le réseau d'accès est de largeur fréquentielle inférieure à 1 ou 2kHz. De telles communications à bande ultra étroite font l'objet de normes, par exemple les normes et projets de normes de l'European Telecommunications Standards Institute (ETSI) « Low Throughput Networks (LTN) ».

L'appareil comporte un boîtier contenant le circuit électronique. Pour les émissions et réceptions radioélectriques, il est connu d'incorporer une antenne dans un bracelet avec une connexion galvanique entre l'antenne et le circuit électronique.

Les brevets US 4754285, US 4922260, US 4977614, US 5134724, US 5179733, US 5189431, EP 1489471, US 6350055 décrivent des exemples d'appareils de télécommunication radioélectrique de ce genre. Cependant il est difficile d'assurer la fiabilité de la connexion galvanique entre l'antenne et le circuit électronique. D'une part, la longueur du bracelet est ajustable, voire élastique, pour s'accommoder à différentes tailles de poignets. D'autre part, le bracelet est mobile par rapport au boîtier et la connexion galvanique entre l'antenne et le circuit électronique se trouve sollicitée physiquement. Le cas d'un collier pour animal présente des difficultés analogues.

Une structure d'antenne simple qui est plus fiable est souhaitable.

### EXPOSÉ DE L'INVENTION

La présente invention a pour objectif de remédier à tout ou partie des limitations des solutions de l'art antérieur.

À cet effet, l'invention concerne un appareil pour télécommunication radioélectrique comportant un circuit électronique, une antenne pour l'émission et/ou la réception de signaux radioélectriques pour une communication sans fil avec un réseau d'accès, et une sangle servant d'attache de l'appareil. L'antenne comporte une boucle antennaire. La boucle antennaire inclut une plaque conductrice et un boîtier contenant le circuit électronique et présentant au moins une face conductrice. La plaque conductrice de la boucle antennaire s'étend parallèle en vis-à-vis de la face conductrice du boîtier. La plaque conductrice et la face conductrice du boîtier sont connectées électriquement ensemble d'un côté de la face conductrice du boîtier et de l'autre côté de la face conductrice sont connectées électriquement avec le circuit électronique. La sangle comporte une partie conductrice formant une masse antennaire de l'antenne, ladite partie conductrice s'étend parallèle en vis-à-vis de la plaque conductrice et isolée électriquement de ladite plaque conductrice, de sorte que ladite partie conductrice est en couplage capacitif avec ladite plaque conductrice. Il peut y avoir un effet de couplage inductif aussi entre la partie conductrice de la sangle et la plaque conductrice, mais typiquement le couplage capacitif sera prépondérant.

Aucune connexion galvanique n'est nécessaire entre la sangle et le circuit électronique, évitant ainsi toute réduction de fiabilité due à un mouvement relatif. La partie conductrice de la sangle améliore les performances antennaire de la boucle par le couplage entre elles, qui peut être en partie inductif aussi bien que capacitif. La partie conductrice de la sangle apporte un effet de plan de masse à l'ensemble antennaire, même si elle n'est pas entièrement plane mais incurvée au moins en partie, et même si sa surface est limitée, notamment sa dimension transversale à la sangle. La sangle peut être entièrement conductrice, en matière métallique par exemple, intégrant la partie conductrice, ou la partie conductrice peut être rapportée sur une matière électriquement isolante de la sangle.

Le circuit électronique peut comporter un module radio pour le traitement et/ou la génération de signaux radioélectriques reçus et/ou à émettre par l'antenne, et un module d'adaptation d'impédance entre le module radio et l'antenne. Le module d'adaptation d'impédance permet d'adapter l'impédance de l'antenne à celle du module radio afin de maximiser la transmission de puissance RF entre le module radio et l'antenne et inversement. Le module d'adaptation d'impédance peut comporter un premier composant capacitif en série entre l'antenne et le module radio, et un deuxième composant capacitif entre l'antenne et la masse du module radio.

La plaque conductrice de la boucle antennaire peut être solidaire mécaniquement avec le boîtier et avec la partie conductrice de la sangle, évitant encore tout mouvement relatif entre eux. La plaque conductrice de la boucle antennaire peut être montée sur une cale électriquement isolante qui est solidaire avec la partie conductrice de la sangle. La cale isolante peut faire partie d'un support sur lequel le boîtier est monté. Alternativement, le support est monté de manière amovible sur la sangle et comporte un aimant adapté à maintenir ledit support sur ladite sangle par attraction magnétique avec la partie conductrice de ladite sangle.

La face conductrice du boîtier de la boucle antennaire peut être connectée électriquement à la masse du circuit électronique et la plaque conductrice de la boucle antennaire peut être connectée électriquement à une ligne de sortie et/ou d'entrée du circuit électronique d'un côté du boîtier.

La partie conductrice de la sangle peut s'étendre au-delà de la plaque conductrice de la boucle antennaire et de la face conductrice du boîtier sur toute ou partie de la longueur de la sangle.

L'appareil peut comporter un affichage sur une surface opposée à la face conductrice du boîtier, le circuit électronique peut avoir des fonctionnalités d'une montre connectée, et la sangle peut être un bracelet adapté pour attacher l'appareil à un poignet humain.

Le circuit électronique peut avoir des fonctionnalités de géolocalisation et d'émission de données de géolocalisation vers un réseau d'accès, et la sangle peut être un collier adapté pour attacher l'appareil à un cou, d'un animal domestique, ou d'un animal ou oiseau sauvage, par exemple.

### PRÉSENTATION DES FIGURES

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue en perspective stylisée d'une montre connectée sur un poignet humain selon un mode de réalisation de l'invention, donné à titre d'exemple,
- la Figure 2 est une vue en perspective d'une boucle antennaire élémentaire correspondant au fonctionnement d'une boucle antennaire dans la montre de la Figure 1,
- la Figure 3 illustre une vue de dessus et une vue en perspective plus détaillées de la montre de la Figure 1,
- la Figure 4 est un schéma fonctionnel d'un circuit électronique dans la montre de la Figure 1,
- la Figure 5 est une coupe selon le plan Y-Z de la montre de la Figure 1 illustrant schématiquement l'orientation des lignes de champs électriques,
- la Figure 6 est une coupe selon le plan X-Y de la montre de la Figure 1 illustrant schématiquement l'orientation des lignes de champs magnétiques,
- les Figures 7 à 9 sont des diagrammes de gain de la structure antennaire de la montre des Figures 1 à 6 dans différents plans, donnés à titre d'exemple, et
- la Figure 10 est une graphique illustrant l'impact sur le réglage en fréquence de différents espacements entre une plaque conductrice de la boucle antennaire et une partie conductrice d'une sangle dans la montre de la Figure 1.

Les éléments des dessins sont illustrés dans un esprit de simplicité et de clarté, et ne sont pas forcément à l'échelle ni réalistes dans le détail. Des références identiques d'une figure à une autre désignent des éléments identiques ou analogues.

### DESCRIPTION DÉTAILLÉE DE MODES DE RÉALISATION

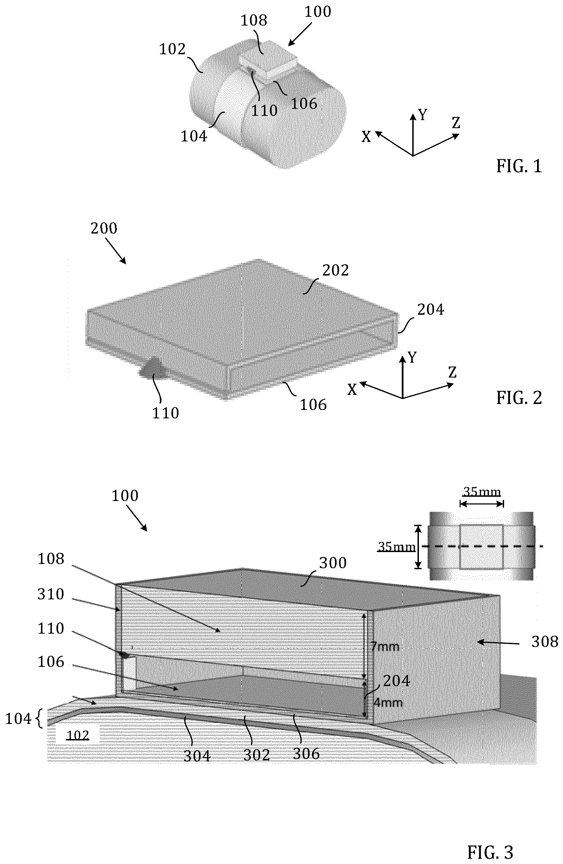

La Figure 1 représente schématiquement une montre connectée 100 selon un mode de réalisation de l'invention, donné à titre d'exemple, sur un poignet humain 102. La montre 100 comporte une antenne pour l'émission et/ou la réception de signaux radioélectriques pour communication sans fil avec un réseau d'accès, et une sangle 104 en forme de bracelet servant d'attache de l'appareil au poignet 102. L'antenne comporte une boucle antennaire, dont le fonctionnement est illustré par la boucle antennaire élémentaire 200 (Figure 2), et une masse antennaire, faisant réflecteur. La boucle antennaire inclut une plaque conductrice 106 et un boîtier 108 contenant le circuit électronique et présentant au moins une face conductrice, qui est la face inférieure du boîtier 108, cachée en Figure 1, et symbolisée par la face 202 en Figure 2. La plaque conductrice 106 s'étend parallèle et en vis-à-vis de la face conductrice 202 du boîtier 108. La plaque conductrice 106 et la face conductrice 202 du boîtier sont connectées électriquement d'un côté du boîtier 108 à la ligne radio fréquence (RF) du circuit électronique dans le boîtier, comme indiqué à 110, pour échanger des signaux électriques avec le circuit électronique. De l'autre côté du boîtier 108 la plaque conductrice 106 et la face conductrice 202 du boîtier sont connectées électriquement ensemble, comme indiqué à 204 en Figure 2. Dans un autre mode de réalisation spécifique de l'invention, dans lequel la ligne RF du circuit électronique est différentielle, la plaque conductrice 106 et la face conductrice 202 du boîtier ont des connexions différentielles à la ligne RF.

La Figure 3 illustre la montre 100 plus en détail. À titre d'exemple, le boîtier 108 peut être de forme carrée, 35mm de côté et 7 mm de hauteur. Les côtés, et même l'ensemble des faces, du boîtier 108 peuvent être conducteurs, par exemple de matière métallique, avec une ouverture pour les connexions 110 entre la ligne RF et la plaque 106. La face supérieure 300 du boîtier 108, opposée à la face 202, peut comporter un affichage (non illustré), éventuellement tactile. La sangle 104 comporte une partie conductrice 302, qui fait plan de masse antennaire, rapportée sur une partie 304 de la sangle qui fait bracelet, et la partie 304 de la sangle peut être de matière électriquement isolante. Dans un autre mode spécifique de réalisation de l'invention, la partie conductrice 302 est intégrée dans le bracelet, et le bracelet peut être de matière conductrice, du métal par exemple. Tel qu'illustré sur la Figure 3, la sangle 104 ne présente pas d'interruption au niveau du boîtier 108, et s'étend sur toute la longueur (suivant l'axe Z de la Figure 1) de la plaque conductrice 106. La partie conductrice 302 formant la masse antennaire s'étend parallèle à ladite plaque conductrice 106 sur toute la longueur de ladite plaque conductrice 106, et est isolée électriquement de ladite plaque conductrice 106. La sangle 104 peut comporter un fermoir (non illustré) pour attacher la sangle autour du poignet 102, ou peut être élastique, permettant de la passer sur la main.

Un coffret en matière électriquement isolante, plastique par exemple, sert de support du boîtier 108, rendant le boîtier solidaire mécaniquement avec la plaque conductrice 106 de la boucle antennaire et avec la partie conductrice 302 de la sangle, évitant tout mouvement relatif entre eux. Le coffret support comporte une cale 306 en matière électriquement isolante reliant la plaque conductrice 106 de la boucle et la partie conductrice 302 de la sangle pour maintenir l'espacement et le parallélisme prévus entre eux. L'épaisseur de la cale 306 peut être par exemple entre 0.1 mm et 1.0mm (et dans un exemple est de 0,5mm) pour une fréquence du signal porteur de 0.9GHz par exemple. Le coffret comporte aussi des parois 308 et 310 servant de support pour le boîtier 108. Le coffret peut couvrir seulement deux côtés du boîtier 108, comme illustré, ou peut comporter deux parois supplémentaires de façon à couvrir les quatre côtés du boîtier carré 108. Le boîtier et le coffret peuvent avoir une forme autre que le carré illustré, par exemple cylindrique. L'espace entre la face 202 du boîtier et la plaque conductrice 106 de la boucle antennaire et entre les parois 308 et 310 peut être rempli seulement d'air ou peut être comblé de matière isolante, et dans l'exemple illustré a une épaisseur de 4mm. Les connexions électriques avec le circuit électronique peuvent être sur le bord, comme indiqué en Figure 3, ou au centre du côté de la plaque conductrice 106, comme indiqué en Figures 1 et 2. Les connexions électriques de la plaque conductrice 106 avec le circuit électronique d'une part, et avec la face 202 du boîtier 108 d'autre part, peuvent être espacées transversalement du poignet 102, comme indiqué en Figures 2 et 3, ou longitudinalement du poignet. De manière plus générale, la plaque conductrice 106 et la face conductrice 202 du boîtier sont connectées électriquement dans une première zone de connexion, et la plaque conductrice 106 et la face conductrice 202 du boîtier sont connectées électriquement au circuit électronique dans une seconde zone de connexion. La première zone de connexion et la seconde zone de connexion sont dans des modes préférés de réalisation distantes l'une de l'autre, par exemple séparées par une distance qui est égale ou supérieure à la plus petite dimension de la face conductrice 202 dudit boîtier parmi les dimensions mesurées suivant les axes respectivement X et Z de la Figure 1 (le plan X-Z étant parallèle à ladite face conductrice 202), comme c'est le cas dans les exemples des Figures 2 et 3 où la première zone de connexion et la seconde zone de connexion sont agencées dans des côtés opposés dudit boîtier suivant l'axe Z de la Figure 1.

Dans le cas d'un collier de géolocalisation, la structure de la montre 100 est modifiée, en prévoyant une longueur de la sangle 104 adaptée au cou. Aucun affichage comme sur la face exposée de la montre 100 n'est nécessaire et le circuit électronique à l'intérieur du boîtier 108 est modifié pour assurer les fonctionnalités souhaitées.

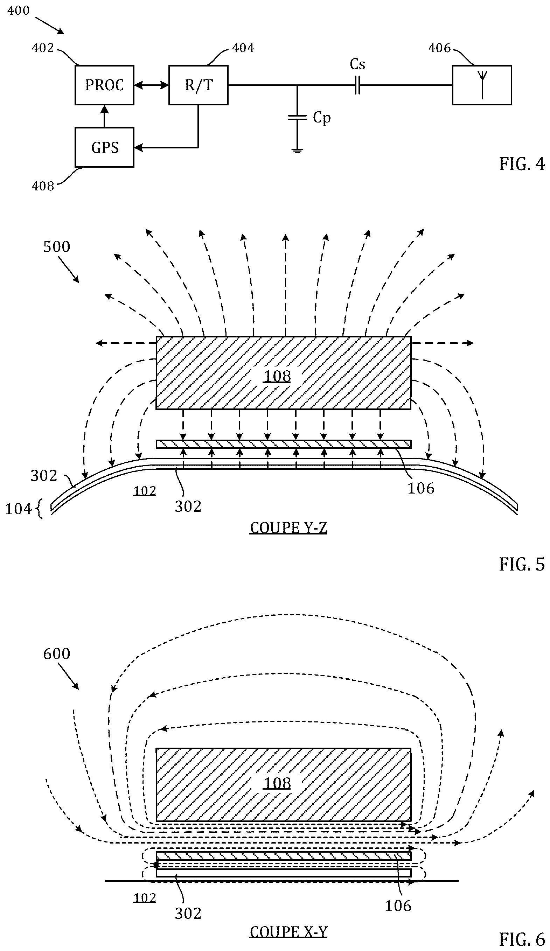

La Figure 4 illustre un exemple de circuit électronique 400 dans le boîtier 108. Le circuit électronique 400 comporte un processeur 402 traitant les messages reçus ou à envoyer, un émetteur et/ou récepteur 404, et un module d'adaptation d'impédance entre le module radio et la plaque 106 de l'antenne 406 pour adapter l'impédance de l'antenne à celle du module radio afin de maximiser la transmission de puissance RF entre le module radio et l'antenne et inversement, la face 202 du boîtier 108 étant connectée à la masse du circuit électronique 400. Le module d'adaptation d'impédance comporte un premier composant capacitif Cs en série entre l'antenne et le circuit électronique, et un deuxième composant capacitif Cp entre l'antenne et la masse du circuit électronique. Dans l'exemple de la Figure 3, les capacités des composants sont Cs=2,2pF et Cp=6pF, ramenant l'impédance que l'antenne présente à 50Ω et la fréquence de résonance à la fréquence du signal porteur de 0.9GHz. Le circuit 400 peut comporter aussi un circuit 408 de positionnement par satellites GPS avec une seconde antenne spécifique (non dessinée), recevant des signaux GPS du récepteur 404 et communiquant les données de positionnement au processeur 402. L'émetteur 404 émet les données de géolocalisation vers un réseau d'accès. La bande passante obtenue avec les dimensions et caractéristiques de cet exemple est de 12MHz en prenant comme critère que le paramètre de scattering perte de retour *S_{11<}-10dB.*

La Figure 5 illustre les lignes de champs électriques 500 dans une coupe transversale du poignet dans le plan Y-Z de la Figure 1. Les flèches indiquent les lignes de champs électriques lors d'un cycle du signal radioélectrique, et s'inversent bien sûr à chaque cycle du signal. La plaque conductrice 106 de la boucle antennaire induit des charges électriques dans la partie conductrice 302 de la sangle 104, qui fait plan de masse antennaire et réflecteur, et les charges circulant créent des courants dans la plaque conductrice 106 et dans la partie conductrice 302 de la sangle. La Figure 6 illustre les lignes de champs magnétiques 600 dans une coupe longitudinale du poignet dans le plan X-Y de la Figure 1, et les lignes de champs magnétiques sont créés par et entretiennent les courants électriques dans la plaque conductrice 106 et la partie conductrice 302 de la sangle 104.

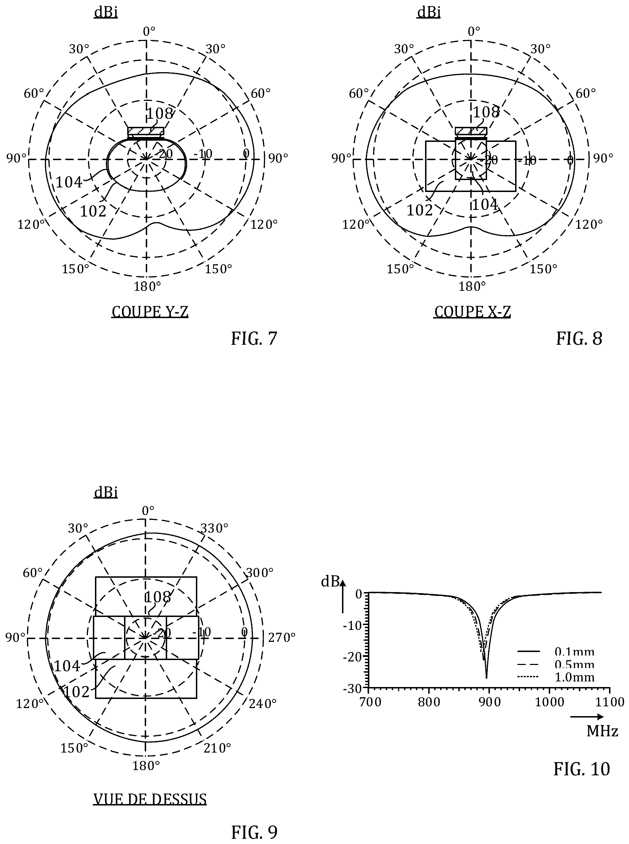

Les Figures 7 à 9 illustrent le gain de la structure antennaire dans des plans respectivement transversal au poignet 102, longitudinal du poignet, et vu de dessus. Le diagramme de rayonnement de la structure antennaire est omnidirectionnel. Une efficacité totale de 45% est obtenue dans la configuration présentée et en présence du poignet humain. En comparaison, une efficacité proche de 100% est obtenue en l'absence du poignet.

La longueur de la partie conductrice 302 de la sangle 104 a un impact limité sur l'efficacité de l'antenne entre une longueur d'environ 70mm couvrant environ 120° autour du poignet 102, illustrée en Figure 5, et une longueur d'environ 140mm couvrant environ 240° autour du poignet 102, illustrée en Figure 7. La longueur de la partie conductrice 302 de la sangle 104 n'a pas d'impact significatif sur le réglage en fréquence.

Le contact électrique ou isolation de la partie conductrice 302 de la sangle 104 par rapport à la peau du poignet (bracelet 304 conducteur ou isolant), et le boîtier 108 rempli ou creux n'ont pas d'impact significatif sur le module adaptation Cs, Cp.

L'augmentation de la hauteur du boîtier 108 de 1mm à 11mm augmente la bande passante et permet moins de pertes dans le module d'adaptation, et augmente le rendement de l'antenne de 1dB. L'augmentation de la distance entre la face conductrice 202 du boîtier et la plaque conductrice 106 de 3mm à 4mm augmente la bande passante et augmente le rendement de l'antenne de 0,5dB.

La Figure 10 illustre l'incidence de l'espacement entre la plaque conductrice 106 de la boucle et la partie conductrice 302 de la sangle entre 0,1mm, 0,5mm et 1,0mm, que définit l'épaisseur de la cale 306. Le module d'adaptation Cs, Cp peut être identique dans tous les cas et l'impact sur le rendement de l'antenne est suffisamment limité pour rendre acceptables les tolérances mécaniques de l'épaisseur de la cale 306.

Le coffret peut être monté de manière amovible sur la sangle 104 et des moyens de maintien sont prévus pour maintenir ledit coffret sur ladite sangle 104. Par exemple, les moyens de maintien comportent un aimant (non représenté sur les figures) qui peut être ajouté au milieu de la plaque conductrice 106 de la boucle sans impact notable sur les performances de l'antenne. Cet aimant est isolé de la masse antennaire et aussi de l'antenne, par exemple en positionnant ledit aimant dans une fente de la plaque conductrice 106. Cet aimant permet de maintenir le coffret du boîtier 108 en vis-à-vis de la masse antennaire, par attraction magnétique avec la partie conductrice 302 formant ladite masse antennaire. Dans des modes particuliers de réalisation, la sangle 104 peut comporter des moyens de positionnement dudit coffret par rapport à la sangle 104, comme par exemple un cadre ajusté aux dimensions dudit coffret ou plusieurs cales, permettant un assemblage aisé et précis de l'ensemble bracelet + montre.

De manière plus générale, il est à noter que les modes de mise en œuvre et de réalisation considérés ci-dessus ont été décrits à titre d'exemples non limitatifs, et que d'autres variantes sont par conséquent envisageables. Par exemple, le découpage entre blocs de logique du circuit électronique est illustratif et d'autres découpages de fonctionnalités sont possibles dans des réalisations de l'invention, deux blocs pouvant fusionner ou séparer. Le système peut comporter plusieurs antennes opérant à des fréquences différentes associées avec des modules émettrices et/ou réceptrices respectives. Les dispositifs décrits peuvent au moins partiellement être réalisés par des processeurs ou autres entités programmables avec des logiciels.

## Revendications

1. Appareil (100) pour télécommunication radioélectrique comportant un circuit électronique (400), une antenne pour l'émission et/ou la réception de signaux radioélectriques pour communication sans fil avec un réseau d'accès, et une sangle (104) servant d'attache de l'appareil, **caractérisé en ce que** l'antenne comporte une boucle antennaire (200), la boucle antennaire incluant une plaque conductrice (106) et un boîtier (108) contenant le circuit électronique (400) et présentant au moins une face conductrice (202), la plaque conductrice (106) de la boucle antennaire s'étend parallèle en vis-à-vis de la face conductrice (202) du boîtier, la plaque conductrice (106) et la face conductrice (202) du boîtier sont connectées électriquement (204) ensemble d'un côté de la face conductrice (202) du boîtier et de l'autre côté de la face conductrice (202) sont connectées électriquement (110) avec le circuit électronique (400), et la sangle (104) comporte une partie conductrice (302) formant une masse antennaire (302) de l'antenne, ladite partie conductrice s'étend parallèle en vis-à-vis de la plaque conductrice (106) et isolée électriquement de ladite plaque conductrice (106), de sorte que ladite partie conductrice (302) est en couplage capacitif avec ladite plaque conductrice (106).

2. Appareil (100) selon la revendication 1, **caractérisé en ce que** le circuit électronique (400) comporte un module radio (404) pour le traitement et/ou la génération de signaux radioélectriques reçus et/ou à émettre par l'antenne, et un module d'adaptation d'impédance (Cs, Cp) entre le module radio et l'antenne.

3. Appareil (100) selon la revendication 2, **caractérisé en ce que** le module d'adaptation d'impédance (Cs, Cp) comporte un premier composant capacitif (Cs) en série entre l'antenne et le module radio, et un deuxième composant capacitif (Cp) entre l'antenne et la masse du module radio.

4. Appareil (100) selon l'une quelconque des revendications précédentes, **caractérisé en ce que** la plaque conductrice (106) de la boucle antennaire est solidaire mécaniquement avec le boîtier (108) et avec la partie conductrice (302) de la sangle.

5. Appareil (100) selon la revendication 4, **caractérisé en ce que** la plaque conductrice (106) de la boucle antennaire est montée sur une cale (306) électriquement isolante.

6. Appareil (100) selon la revendication 5, **caractérisé en ce que** la cale isolante (306) fait partie d'un support sur lequel le boîtier (108) est monté.

7. Appareil (100) selon la revendication 6, **caractérisé en ce que** le support est monté de manière amovible sur la sangle (104) et comporte un aimant adapté à maintenir ledit support sur ladite sangle par attraction magnétique avec la partie conductrice (302) de ladite sangle.

8. Appareil (100) selon l'une quelconque des revendications précédentes, **caractérisé en ce que** la face conductrice (202) du boîtier de la boucle antennaire est connectée électriquement à la masse du circuit électronique et la plaque conductrice (106) est connectée électriquement à une ligne de sortie et/ou d'entrée du circuit électronique d'un côté du boîtier.

9. Appareil (100) selon l'une quelconque des revendications précédentes, **caractérisé en ce que** la partie conductrice (302) de la sangle (104) s'étend au-delà de la plaque conductrice (106) de la boucle antennaire et de la face conductrice du boîtier (202) sur toute ou partie de la longueur de la sangle.

10. Appareil (100) selon l'une quelconque des revendications précédentes, **caractérisé en ce que** l'appareil comporte un affichage sur une surface (300) opposée à la face conductrice (202) du boîtier, que le circuit électronique (400) a des fonctionnalités d'une montre connectée, et que la sangle (104) est un bracelet adapté pour attacher l'appareil à un poignet humain (102).

11. Appareil (100) selon l'une quelconque des revendications 1 à 9, **caractérisé en ce que** le circuit électronique (400) a des fonctionnalités de géolocalisation (408) et d'émission de données de géolocalisation vers un réseau d'accès, et que la sangle (104) est un collier adapté pour attacher l'appareil à un cou.

## Patentansprüche

1. Vorrichtung (100) zur funkelektrischen Telekommunikation, eine elektronische Schaltung (400), eine Antenne zum Senden und/oder Empfangen von funkelektrischen Signalen zur drahtlosen Kommunikation mit einem Zugangsnetzwerk und ein Band (104), das als Befestigung der Vorrichtung dient, beinhaltend, **dadurch gekennzeichnet, dass** die Antenne eine Antennenschnalle (200) beinhaltet, wobei die Antennenschnalle eine Leiterplatte (106) und ein Gehäuse (108) einschließt, die die elektronische Schaltung (400) enthält, und mindestens eine Leiterfläche (202) aufweist, sich die Leiterplatte (106) der Antennenschnalle parallel gegenüber der Leiterfläche (202) des Gehäuses erstreckt, die Leiterplatte (106) und die Leiterfläche (202) des Gehäuses auf einer Seite der Leiterfläche (202) des Gehäuses zusammen elektrisch verbunden (204) sind, und auf der anderen Seite der Leiterfläche (202) mit der elektronischen Schaltung (400) elektrisch verbunden (110) sind, und das Band (104) ein Leiterteil (302) beinhaltet, das eine Antennenmasse (302) der Antenne bildet, wobei sich das Leiterteil parallel gegenüber der Leiterplatte (106) erstreckt, und von der Leiterplatte (106) elektrisch isoliert ist, sodass das Leiterteil (302) in kapazitiver Kopplung mit der Leiterplatte (106) ist.

2. Vorrichtung (100) nach Anspruch 1, **dadurch gekennzeichnet, dass** die elektronische Schaltung (400) ein Funkmodul (404) zur Verarbeitung und/oder Generierung von durch die Antenne empfangenen und/oder zu sendenden funkelektrischen Signalen und ein Impedanz-Anpassungsmodul (Cs, Cp) zwischen dem Funkmodul und der Antenne beinhaltet.

3. Vorrichtung (100) nach Anspruch 2, **dadurch gekennzeichnet, dass** das Impedanz-Anpassungsmodul (Cs, Cp) eine erste kapazitive Komponente (Cs) in Reihe zwischen der Antenne und dem Funkmodul, und eine zweite kapazitive Komponente (Cp) zwischen der Antenne und der Masse des Funkmoduls beinhaltet.

4. Vorrichtung (100) nach einem der vorstehenden Ansprüche, **dadurch gekennzeichnet, dass** die Leiterplatte (106) der Antennenschnalle mechanisch fest mit dem Gehäuse (108) und mit Leiterteil (302) des Bandes verbunden ist.

5. Vorrichtung (100) nach Anspruch 4, **dadurch gekennzeichnet, dass** die Leiterplatte (106) der Antennenschnalle auf einer elektrisch isolierten Unterlage (306) montiert ist.

6. Vorrichtung (100) nach Anspruch 5, **dadurch gekennzeichnet, dass** die isolierte Unterlage (306) Teil einer Halterung ist, auf der das Gehäuse (108) montiert ist.

7. Vorrichtung (100) nach Anspruch 6, **dadurch gekennzeichnet, dass** die Halterung abnehmbar auf dem Band (104) montiert ist und einen Magneten beinhaltet, der ausgeführt ist, um die Halterung durch magnetische Anziehung mit dem Leiterteil (302) des Bandes auf dem Band zu halten.

8. Vorrichtung (100) nach einem der vorstehenden Ansprüche, **dadurch gekennzeichnet, dass** die Leiterfläche (202) des Gehäuses der Antennenschnalle elektrisch mit der Masse der elektronischen Schaltung verbunden ist und die Leiterplatte (106) elektrisch mit einer Ausgangs- und/oder Eingangsleitung der elektronischen Schaltung auf einer Seite des Gehäuses verbunden ist.

9. Vorrichtung (100) nach einem der vorstehenden Ansprüche, **dadurch gekennzeichnet, dass** sich das Leiterteil (302) des Bandes (104), über die gesamte Länge des Bandes oder einen Teil davon, über die Leiterplatte (106) der Antennenschnalle und die Leiterfläche des Gehäuses (202) hinaus erstreckt.

10. Vorrichtung (100) nach einem der vorstehenden Ansprüche, **dadurch gekennzeichnet, dass** die Vorrichtung eine Anzeige an einer zur Leiterfläche (202) des Gehäuses gegenüberliegenden Oberfläche (300) beinhaltet, dass die elektronische Schaltung (400) Funktionalitäten einer verbundenen Uhr aufweist, und dass das Band (104) ein Uhrarmband ist, das ausgeführt ist, um die Vorrichtung an einem menschlichen Handgelenk (102) zu befestigen.

11. Vorrichtung (100) nach einem der Ansprüche 1 bis 9, **dadurch gekennzeichnet, dass** die elektronische Schaltung (400) Funktionalitäten zum Geolokalisieren (408) und Senden von Geolokalisierungsdaten zu einem Zugangsnetzwerk aufweist, und dass das Band (104) ein Halsband ist, das ausgeführt ist, um die Vorrichtung an einem Hals zu befestigen.

## Claims

1. Apparatus (100) for radioelectric communication comprising an electronic circuit (400), an antenna for the emission and/or the reception of radioelectric signals for wireless communication with an access network, and a strap (104) serving as a fastener of the apparatus, **characterised in that** the antenna comprises an antenna loop (200), the antenna loop including a conductive plate (106) and a case (108) containing the electronic circuit (400) and having at least one conductive face (202), the conductive plate (106) of the antenna loop extends in parallel to and facing the conductive face (202) of the case, the conductive plate (106) and the conductive face (202) of the case are electrically connected (204) together on one side of the conductive face (202) of the case and on the other side of the conductive face (202) are electrically connected (110) to the electronic circuit (400), and the strap (104) comprises a conductive portion (302) forming an antenna ground (302) of the antenna, said conductive portion extends in parallel to and facing the conductive plate (106) and electrically insulated from said conductive plate (106), in such a way that said conductive portion (302) is capacitively coupled to said conductive plate (106).

2. Apparatus (100) according to claim 1, **characterised in that** the electronic circuit (400) comprises a radio module (404) for the processing and/or the generation of radioelectric signals received and/or to be emitted by the antenna, and a module (Cs, Cp) for impedance matching between the radio module and the antenna.

3. Apparatus (100) according to claim 2, **characterised in that** the impedance-matching module (Cs, Cp) comprises a first capacitive component (Cs) in series between the antenna and the radio module, and a second capacitive component (Cp) between the antenna and the ground of the radio module.

4. Apparatus (100) according to any one of the previous claims, **characterised in that** the conductive plate (106) of the antenna loop is mechanically rigidly connected to the case (108) and to the conductive portion (302) of the strap.

5. Apparatus (100) according to claim 4, **characterised in that** the conductive plate (106) of the antenna loop is mounted on an electrically insulating spacer (306).

6. Apparatus (100) according to claim 5, **characterised in that** the insulating spacer (306) is part of a support on which the case (108) is mounted.

7. Apparatus (100) according to claim 6, **characterised in that** the support is removably mounted on the strap (104) and comprises a magnet adapted for maintaining said support on said strap via magnetic attraction with the conductive portion (302) of said strap.

8. Apparatus (100) according to any one of the previous claims, **characterised in that** the conductive face (202) of the case of the antenna loop is electrically connected to the ground of the electronic circuit and the conductive plate (106) is electrically connected to an output and/or input line of the electronic circuit on one side of the case.

9. Apparatus (100) according to any one of the previous claims, **characterised in that** the conductive portion (302) of the strap (104) extends beyond the conductive plate (106) of the antenna loop and the conductive face of the case (202) over all or a portion of the length of the strap.

10. Apparatus (100) according to any one of the previous claims, **characterised in that** the apparatus comprises a display on a surface (300) opposite to the conductive face (202) of the case, the electronic circuit (400) has functionalities of a smartwatch, and the strap (104) is a bracelet adapted for attaching the apparatus to a human wrist (102).

11. Apparatus (100) according to any one of claims 1 to 9, **characterised in that** the electronic circuit (400) has functionalities of geolocation (408) and of emission of geolocation data to an access network, and the strap (104) is a collar adapted for attaching the apparatus to a neck.
